# EUROPÄISCHE PATENTSCHRIFT

(11) **EP 1 799 697 B1**
(45) Veröffentlichungstag und Bekanntmachung des Hinweises auf die Patenterteilung: **14.03.2012**
(21) Anmeldenummer: 05796041.1
(22) Anmeldetag: 30.09.2005
(51) Int. Cl.: C07F 9/6574, B01D 11/00

(54) **VERFAHREN ZUR REINIGUNG VON PHOSPHORHALTIGEN CHELAT-LIGANDEN**
METHOD FOR PURIFYING CHELATE LIGANDS CONTAINING PHOSPHORUS
PROCEDE POUR PURIFIER DES LIGANDS CHELATES CONTENANT DU PHOSPHORE

(30) Priorität: 08.10.2004 DE 102004049339
(43) Veröffentlichungstag der Anmeldung: 27.06.2007
(73) Patentinhaber: BASF SE, 67056 Ludwigshafen (DE)
(72) Erfinder: BARTSCH, Michael, 67433 Neustadt (DE); BAUMANN, Robert, 68159 Mannheim (DE); HADERLEIN, Gerd, 67269 Grünstadt (DE); AECHTNER, Tobias, 68163 Mannheim (DE); SCHEIDEL, Jens, 69493 Hirschberg (DE); LUYKEN, Hermann, 67069 Ludwigshafen (DE); PFAB, Peter, 67433 Neustadt (DE); SIEGEL, Wolfgang, 67117 Limburgerhof (DE); WEISKOPF, Verena, 67577 Alsheim (DE)
(86) Internationale Anmeldenummer: PCT/EP2005/010561
(87) Internationale Veröffentlichungsnummer: WO 2006/040023

(56) Entgegenhaltungen:
- EP-A- 0 136 543
- WO-A-2004/091780

## Beschreibung

Die vorliegende Erfindung betrifft ein Verfahren zur Reinigung von phosphorhaltigen Chelat-Liganden durch Extraktion mit polaren Extraktionsmitteln.

Aus der US-A-6,069,167, der US-A-6,031,120, der WO-A-03/44029 und WO-A-03/62171 ist die selektive Synthese bestimmter Chelatliganden durch Umsetzung mit Aminhilfsbasen bekannt.

Die Liganden fallen bei diesen Synthesen nach Abtrennung der Aminbasenhydrochloride (Phasentrennung oder Filtration), als Rohlösung in einem unpolaren Lösungsmittel, wie z.B. Toluol, an. Bei Einsatz des Liganden in der homogen Katalyse, wird das unpolare Lösungsmittel oft gegen ein polares Lösungsmittel getauscht. Beispielhaft sei hier die homogen nickelkatalysierte Hydrocyanierung von 3-Pentennitril zu ADN erwähnt, wo das polare Lösungsmittel gleich dem Reaktanden ist. Eigene Untersuchungen haben gezeigt, dass diese Chelatliganden in unpolaren Medien stabil sind, wohingegen sie in polaren Medien, aufgrund von Amin- und Aminhydrochloridspuren aus der Ligandsynthese irreversibel zerfallen oder umlagern.

Untersuchungen haben gezeigt, dass die die Umlagerung auslösenden Komponenten durch Säulenchromatographie an Kieselgel abgetrennt werden können. Diese Form der Ligandreinigung ist jedoch für ein technisches Verfahren im Multitonnenmaßstab zu kostenintensiv.

Aus der EP-A-136 543 ist ein Verfahren zur Herstellung von Nukleosidalkyl-, -aralkyl- und -arylphosphoniten und -phosphonaten bekannt.

Der vorliegenden Erfindung lag daher die Aufgabe zugrunde ein geeignetes kostengünstiges Verfahren zur Aufreinigung der Ligandrohlösung zu entwickeln und den zuvor genannten Nachteilen abzuhelfen.

Demgemäß wurde ein neues und verbessertes Verfahren zur Reinigung von phosphorhaltigen Chelat-Liganden durch Extraktion gefunden, welches dadurch gekennzeichnet ist, dass man polare Extraktionsmittel und als phosphorhaltige Chelat-Liganden bidentate Phosphite, Phosphinite, Phosphitphosphinite, Phosphit-phosphonite und Phosphonite einsetzt.

Die vorliegende Erfindung kann wie folgt durchgeführt werden:

Phosphorhaltige Chelat-Liganden aus Synthesen wie sie aus US-A-6,069,267, US-A-6,031,120, WO-A-03/44029 und DE-A-102 30 222 bekannt sind, können nach den dort
beschriebenen Reinigungen, bevorzugt die dort beschriebene Reaktionsausträge direkt mit einem polaren Extraktionsmittel bei Temperaturen von (-20) bis 150°C, bevorzugt (-10) bis 120°C, besonders bevorzugt 0 bis 60°C und einem Druck von 1 bis 5000 kPa, bevorzugt 10 bis 1000 kPa, besonders bevorzugt 50 bis 500 kPa, insbesondere 75 bis 250 kPa gereinigt werden. Für die Extraktion und Phasentrennung hat sich als vorteilhaft eine Temperatur von mindestens 0°C, vorzugsweise mindestens 10°C, besonders bevorzugt mindestens 20°C, eine Temperatur von höchstens 100°C, vorzugsweise höchstens 80°C, besonders bevorzugt höchstens 60°C, ein Druck von mindestens 1 kPa, vorzugsweise mindestens 10 kPa, besonders bevorzugt 20 kPa und ein Druck von höchstens 2000 kPa, vorzugsweise höchstens 1000 kPa, besonders bevorzugt höchstens 500 kPa, erwiesen.

Als polare Extraktionsmittel eignen sich alle aprotischen polaren Lösungsmittel, die mit Aliphaten und Cycloaliphaten zwei Phasen bilden, bevorzugt Nitrile, Dinitrile und Dialkylamine, besonders bevorzugt Dinitrile wie beispielsweise Adipodinitril oder Methylglutarnitril.

Die Extraktion kann in batch-, semibatch- oder kontinuierlicher-Fahrweise in beliebigen geeigneten, dem Fachmann bekannten Vorrichtung durchgeführt werden. Bevorzugt kann in Gegenstrom-Extraktionskolonnen, Mixer-Settler-Kaskaden oder Kombinationen von Mixer-Settler-Kaskaden mit Kolonnen, besonders bevorzugt in Gegenstrom-Extraktionskolonnen, die insbesondere mit Blechpackungen als dispergierenden Elementen ausgestattet sind, gearbeitet werden. In einer weiteren besonders bevorzugten Ausführungsform kann die Extraktion im Gegenstrom in einer kompartimentierten, gerührten Extraktionskolonne durchgeführt werden. Die Phasentrennung kann in einer oder mehreren, an sich für solche Phasentrennungen allgemein bekannten Vorrichtungen durchgeführt werden. In einer vorteilhaften Ausführungsform kann man die Phasentrennung beispielsweise in der Extraktionsvorrichtung mit einem oder mehreren Mixer-Settler-Kombinationen oder durch Ausstattung einer Extraktionskolonne mit einer Beruhigungszone durchführen. Die Phasentrennung kann räumlich und zeitlich je nach apparativer Ausgestaltung auch als letzter Teil der Extraktion betrachtet werden. Die Phasentrennung kann in einer oder mehreren dem Fachmann für solche Phasentrennungen bekannten Vorrichtungen durchgeführt werden. In einer vorteilhaften Ausführungsform kann man die Phasentrennung in der Extraktionsvorrichtung durchführen, beispielsweise in einer oder mehreren Mixer-Settler-Kombinationen oder durch Ausstattung einer Extraktionskolonne mit einer Beruhigungszone.

In einer bevorzugten Ausführungsform des Verfahrens wird der Reaktionsaustrag als kontinuierliche Phase und die polare Phase als disperse Phase eingesetzt. Dies verkürzt in der Regel die Phasentrennzeit und vermindert die Mulmbildung. Jedoch ist auch die umgekehrte Dispergierrichtung, also Reaktionsaustrag als kontinuierliche undKohlenwasserstoff als disperse Phase, möglich. Üblicherweise wählt man die für die Trennleistung der Extraktionsvorrichtung günstigere Dispergierrichtung. In einer besonders bevorzugten Ausführungsform wird das Extraktionsmittel als disperse Phase und der Reaktionsaustrag der Hydrocyanierung als kontinuierliche Phase eingesetzt.

Unter Mulm wird ein Bereich unvollständiger Phasentrennung zwischen Ober- und Unterphase verstanden, meist ein flüssig/flüssig-Gemisch, in dem auch Feststoffe dispergiert sein können. Übermäßige Mulmbildung ist unerwünscht, da sie die Extraktion behindert und u.U. die Extraktionsvorrichtung vom Mulm geflutet werden kann, wodurch sie ihre Trennaufgabe nicht mehr erfüllen kann.

Der Reaktionsaustrag bzw. die vorgereinigten phosphorhaltigen Chelat-Liganden können mit einem aliphatischen oder cycloaliphatischen Kohlenwasserstoff oder deren Gemischen, wie z. B. Hexan-Isomeriengemisch, n-Hexan, Heptan-Isomeriengemisch, n-Heptan, Octan-Isomeriengemisch, n-Octan, Cyclohexan, Methylcyclohexan oder deren Gemische, bevorzugt n-Heptan, n-Octan, Cyclohexan, Methylcyclohexan oder deren Gemische vor oder während der Extraktion oder Phasentrennung verdünnt werden.

Das Volumenverhältnis der Phasen in der Extraktion kann in weiten Bereichen variieren und liegt in der Regel zwischen 0,01:1 bis 10:1, bevorzugt 0,04:1 bis 2,5:1, besonders bevorzugt 0,07:1 bis 1,5:1.

Als phosphorhaltige Chelatliganden eignen sich Liganden der Formel (I) 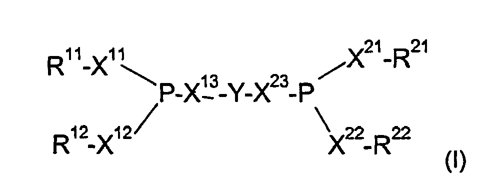 mit
- X¹¹, X¹², X¹³: unabhängig voneinander Sauerstoff oder eine Einzelbindung und X¹¹ oder X¹² oder X¹³ = Sauerstoff
- X²¹, X²², X²³: unabhängig voneinander Sauerstoff oder eine Einzeibindung und X²¹ oder X²² oder X²³ = Sauerstoff
- R¹¹, R¹²: unabhängig voneinander gleiche oder unterschiedliche, einzelne oder verbrückte organische Reste
- R²¹, R²²: unabhängig voneinander gleiche oder unterschiedliche, einzelne oder verbrückte organische Reste,
- Y: Brückengruppe.

Unter Verbindung (11) wird im Sinne der vorliegenden Erfindung eine einzelne Verbindung oder ein Gemisch verschiedener Verbindungen der vorgenannten Formel verstanden.

In einer bevorzugten Ausführungsform können X¹¹, X¹², X¹³, X²¹, X²², X²³ Sauerstoff darstellen. In einem solchen Fall ist die Brückengruppe Y mit Phosphit-Gruppen verknüpft.

In einer anderen bevorzugten Ausführungsform können X¹¹ und X¹² Sauerstoff und X¹³ eine Einzelbindung oder X¹¹ und X¹³ Sauerstoff und X¹² eine Einzelbindung darstellen, so dass das mit X¹¹, X¹² und X¹³ umgebene Phosphoratom Zentralatom eines Phosphonits ist. In einem solchen Fall können X²¹, X²² und X²³ Sauerstoff oder X²¹ und X²² Sauerstoff und X²³ eine Einzelbindung oder X²¹ und X²³ Sauerstoff und X²² eine Einzelbindung oder X²³ Sauerstoff und X²¹ und X²² eine Einzelbindung oder X²¹ Sauerstoff und X²² und X²³ eine Einzelbindung, so dass das mit X²¹, X²² und X²³ umgebene Phosphoratom Zentralatom eines Phosphits, Phosphonits, oder Phosphinits, vorzugsweise eines Phosphonits, sein kann.

In einer anderen anderen bevorzugten Ausführungsform können X¹³ Sauerstoff und X¹¹ und X¹² eine Einzelbindung oder X¹¹ Sauerstoff und X¹² und X¹³ eine Einzelbindung darstellen, so dass das mit X¹¹, X¹² und X¹³ umgebene Phosphoratom Zentralatom eines Phosphonits ist. In einem solchen Fall können X²¹, X²² und X²³ Sauerstoff oder X²³ Sauerstoff und X²¹ und X²² eine Einzelbindung oder X²¹ Sauerstoff und X²² und X²³ eine Einzelbindung, so dass das mit X²¹, X²² und X²³ umgebene Phosphoratom Zentralatom eines Phosphits, oder Phosphinits, vorzugsweise eines Phosphinits, sein kann.

Als Brückengruppe Y kommen vorzugsweise substituierte, beispielsweise mit C₁-C₄-Alkyl, Halogen, wie Fluor, Chlor, Brom, halogeniertem Alkyl, wie Trifluormethyl, Aryl, wie Phenyl, oder unsubstituerte Arylgruppen in Betracht, vorzugsweise solche mit 6 bis 20 Kohlenstoffatomen im aromatischen System, insbesondere Pyrocatechol, Bis(phenol) oder Bis(naphthol).

Die Reste R¹¹ und R¹² können unabhängig voneinander gleiche oder unterschiedliche organische Reste darstellen. Vorzugsweise kommen als Reste R¹¹ und R¹² Arylreste, insbesondere solche mit 6 bis 10 Kohlenstoffatomen, in Betracht, die unsubstituiert oder einfach oder mehrfach substituiert sein können, insbesondere durch C₁-C₄-Alkyl, Halogen, wie Fluor, Chlor, Brom, halogeniertem Alkyl, wie Trifluormethyl, Aryl, wie Phenyl, oder unsubstituierte Arylgruppen.

Die Reste R²¹ und R²² können unabhängig voneinander gleiche oder unterschiedliche organische Reste darstellen. Vorzugsweise kommen als Reste R²¹ und R²² Arylreste, vorzugsweise solche mit 6 bis 10 Kohlenstoffatomen, in Betracht, die unsubstituiert oder einfach oder mehrfach substituiert sein können, insbesondere durch C₁-C₄-Alkyl, Halogen, wie Fluor, Chlor, Brom, halogeniertem Alkyl, wie Trifluormethyl, Aryl, wie Phenyl, oder unsubstituierte Arylgruppen.

Die Reste R¹¹ und R¹² können einzeln oder verbrückt sein.

Die Reste R²¹ und R²² können einzeln oder verbrückt sein.

Die Reste R¹¹, R¹², R²¹ und R²² können alle einzeln, zwei verbrückt und zwei einzeln oder alle vier verbrückt sein in der beschriebenen Art.

In einer besonders bevorzugten Ausführungsform kommen die in US 5,723,641 genannten Verbindungen der Formel I, II, III, IV und V in Betracht.

In einer besonders bevorzugten Ausführungsform kommen die in US 5,512,696 genannten Verbindungen der Formel I, II, III IV, V, VI und VII, insbesondere die dort in den Beispielen 1 bis 31 eingesetzten Verbindungen, in Betracht.

In einer besonders bevorzugten Ausführungsform kommen die in US 5,821,378 genannten Verbindungen der Formel I, II, III, IV, V, VI, VII, VIII, IX, X, XI, XII, XIII, XIV und XV, insbesondere die dort in den Beispielen 1 bis 73 eingesetzten Verbindungen, in Betracht.

In einer besonders bevorzugten Ausführungsform kommen die in US 5,512,695 genannten Verbindungen der Formel I, II, III, IV, V und VI, insbesondere die dort in den Beispielen 1 bis 6 eingesetzten Verbindungen, in Betracht.

In einer besonders bevorzugten Ausführungsform kommen die in US 5,981,772 genannten Verbindungen der Formel I, II, III, IV, V, VI, VII, VIII, IX, X, XI, XII, XIII und XIV, insbesondere die dort in den Beispielen 1 bis 66 eingesetzten Verbindungen, in Betracht.

In einer besonders bevorzugten Ausführungsform kommen die in US 6,127,567 genannten Verbindungen und dort in den Beispielen 1 bis 29 eingesetzten Verbindungen in Betracht.

In einer besonders bevorzugten Ausführungsform kommen die in US 6,020,516 genannten Verbindungen der Formel I, II, III, IV, V, VI, VII, VIII, IX und X, insbesondere die dort in den Beispielen 1 bis 33 eingesetzten Verbindungen, in Betracht.

In einer besonders bevorzugten Ausführungsform kommen die in US 5,959,135 genannten Verbindungen und dort in den Beispielen 1 bis 13 eingesetzten Verbindungen in Betracht.

In einer besonders bevorzugten Ausführungsform kommen die in US 5,847,191 genannten Verbindungen der Formel I, II und III in Betracht.

In einer besonders bevorzugten Ausführungsform kommen die in US 5,523,453 genannten Verbindungen, insbesondere die dort in Formel 1, 2, 3, 4, 5, 6, 7, 8, 9, 10, 11, 12, 13, 14, 15, 16, 17, 18, 19, 20 und 21 dargestellten Verbindungen, in Betracht.

In einer besonders bevorzugten Ausführungsform kommen die in WO 01/14392 genannten Verbindungen, vorzugsweise die dort in Formel V, VI, VII, VIII, IX, X, XI, XII, XIII, XIV, XV, XVI, XVII, XXI, XXII, XXIII dargestellten Verbindungen, in Betracht.

In einer besonders bevorzugten Ausführungsform kommen die in WO 98/27054 genannten Verbindungen in Betracht.

In einer besonders bevorzugten Ausführungsform kommen die in WO 99/13983 genannten Verbindungen in Betracht.

In einer besonders bevorzugten Ausführungsform kommen die in WO 99/64155 genannten Verbindungen in Betracht.

In einer besonders bevorzugten Ausführungsform kommen die in der deutschen Patentanmeldung DE 100 380 37 genannten Verbindungen in Betracht.

In einer besonders bevorzugten Ausführungsform kommen die in der deutschen Patentanmeldung DE 100 460 25 genannten Verbindungen in Betracht.

In einer besonders bevorzugten Ausführungsform kommen die in der deutschen Patentanmeldung DE 101502 85 genannten Verbindungen in Betracht.

In einer besonders bevorzugten Ausführungsform kommen die in der deutschen Patentanmeldung DE 101 502 86 genannten Verbindungen in Betracht.

In einer besonders bevorzugten Ausführungsform kommen die in der deutschen Patentanmeldung DE 102 071 65 genannten Verbindungen in Betracht.

In einer weiteren besonders bevorzugten Ausführungsform der vorliegenden Erfindung kommen die in der US 2003/0100442 A1 genannten phosphorhaltigen Chelatliganden in Betracht.

In einer weiteren besonders bevorzugten Ausführungsform der vorliegenden Erfindung kommen die in der US 2004/062765 A1 genannten phosphorhaltigen Chelatliganden in Betracht.

In einer weiteren besonders bevorzugten Ausführungsform der vorliegenden Erfindung kommen die in der prioritätsgleichen deutschen Patentanmeldung DE-A-10350 333 mit dem Titel "Phosphinitphosphite" der BASF AG genannten phosphorhaltigen Chelatliganden in Betracht.

Durch das erfindungsgemäße Verfahren lassen sich phosphorhaltige Chelat-Liganden erhalten, die einen Gehalt an Aminbase, Aminhydrochlorid oder deren Gemischen von weniger als 100 ppm, bevorzugt weniger als 80 ppm, besonders bevorzugt weniger als 60 ppm haben. In diesem Zusammenhang sind Aminbasen beispielsweise Tralkylamine, Pydidinbasen, Dialkylamine, Monoalkylamine, bevorzugt Methylimidazol, sowie die aus diesen gebildeten Aminhydrochloride beispielsweise Triethylaminhydrochlorid und Methylimidazol-hydrochlorid, bevorzugt Methylimidazol-hydrochlorid.

Diese eignen sich als Liganden für die Hydrocyanierung von Butadien zu Pentennitrilen, die Isomerisierung von 2-Methyl-3-butennitril zu 3-Pentennitril und die Hydrocyanierung von 3-Pentennitril zu Adipodinitril. Die phosphohaltigen Chelatliganden (z.B. Chelatphosphite bekannt aus US-A-5,981,772 und US-A-6,127,567, Chelatphosphonite bekannt aus WO-A-99/64155, WO-A-99/13983, DE-A-101 50 285 und DE-A-102 07 165, Chelatphosphinite bekannt aus US-A-5,523,453, US-A-5,693,843 und DE-A-101 50 286 und Chelatphosphitphosphinite DE-A-103 50 999) können z.B. mit Hilfe von Nickel(0) in die Katalysatoren überführt werden.

### Beispiele

Alle Beispiele mit den Liganden 1, 2 und 3 wurden unter Argon-Atmosphäre (Schutzgasatmosphäre) durchgeführt:

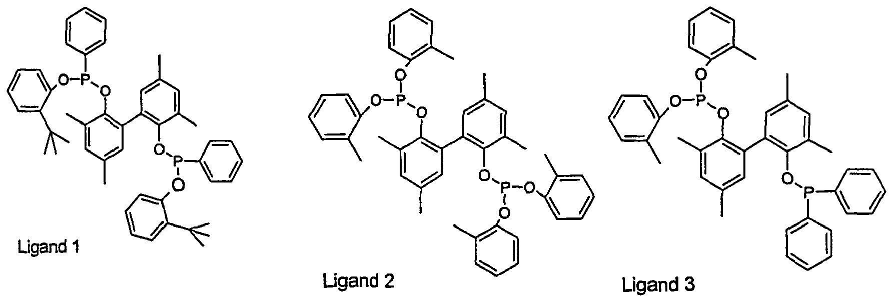

### Beispiel 1

### Extraktion mit Adipodinitril und anschließende und Temperung von Ligand 1

600 g einer 60%igen toluolischen Lösung von Ligand 1 (Rohligand), hergestellt nach DE-A-102 30 222, wurden mit 600 g Methylcyclohexan versetzt und 6 mal mit jeweils 60 g Adipodinitril bei Raumtemperatur extrahiert.

Die Oberphase wurde jeweils mit 3-Pentennitril versetzt und 48 h bei 100°C getempert. Nach dem Tempern wurde mittels ³¹P-NMR der Gehalt an intaktem Ligand 1 bestimmt.

Die Ergebnisse sind in Tabelle 1 zusammengefasst.

**Tabelle 1: Extraktion mit Adipodinitril**

| | Masse | Methylimidazolhydrochlorid | Methylimidazolhydrochlorid | Methylimidazol | Methylimidazol | Ligand 1 Gehalt | Ligand 1 Gehalt [%] |
|---|---|---|---|---|---|---|---|
| | (g) | (ppm) | (mg) | (GC%) | (g) | [%] | nach Tempern |
| Rohligand | 600 | 820 | 492 | 1,72 | 10,32 | 95 | |
| 1.Oberphase | 1212,2 | 82 | 99 | 0,373 | 4,52 | | 51 |
| 2. Oberphase | 1191 | 45 | 53 | 0,077 | 0,92 | | 79 |
| 3. Oberphase | 1181,3 | 30 | 35 | - | - | | 91 |
| 4. Oberphase | 1168,2 | 24 | 28 | - | - | | 92 |
| 5. Oberphase | 1157,3 | 20 | 23 | - | - | | 93 |
| 6. Oberphase | 1145,5 | 20 | 23 | - | - | | 93 |
| 1. Unterphase | 47,8 | 3900 | 186 | 8,924 | 4,27 | | |
| 2. Unterphase | 81,2 | 3000 | 243 | 4,606 | 3,74 | | |
| 3. Unterphase | 69,7 | 1100 | 77 | 2,001 | 1,39 | | |
| 4. Unterphase | 73,1 | 440 | 32 | 0,807 | 0,60 | | |
| 5. Unterphase | 70,9 | 120 | 9 | 0,310 | 0,22 | | |
| 6. Unterphase | 71,8 | 32 | 2 | 0,063 | 0,05 | | |
| | | | **549** | | **10.3** | | |

### Beispiel 2

### Extraktion mit Methylglutarnitril und anschließende Temperung von Ligand 1

Die Durchführung erfolgte analog Beispiel 1 mit Methylglutarnitril anstelle von Adipodinitril.

Die Ergebnisse sind in Tabelle 2 zusammengefasst.

**Tabelle 2: Extraktion mit Methylglutarnitril**

| | Masse | Methylimidazolhydrochlorid | Methylimidazolhydrochlorid | Methylimidazol | Methylimidazol | Ligand 1 Gehalt | Ligand 1 Gehalt [%] nach |
|---|---|---|---|---|---|---|---|
| | (g) | (ppm) | (mg) | (GC%) | (g) | [%] | Tempern |
| Rohligand | 600 | 820 | 492 | 1.94 | 11.6 | 94 | |
| 1.Oberphase | 1219 | 22 | 27 | 0.40 | 4.9 | | 76 |
| 2. Oberphase | 1200 | 19 | 23 | 0.14 | 1.7 | | 85 |
| 3. Oberphase | 1185 | 19 | 23 | 0.03 | 0.4 | | 91 |
| 4. Oberphase | 1169 | 20 | 23 | - | - | | 92 |
| 5. Oberphase | 1157 | 17 | 20 | - | - | | 92 |
| 6. Oberphase | 1143 | 17 | 19 | - | - | | 92 |
| 1. Unterphase | 41 | 8000 | 328 | 8.90 | 3.6 | | |
| 2. Unterphase | 79 | 2200 | 174 | 4.51 | 3.6 | | |
| 3. Unterphase | 75 | 360 | 27 | 2.14 | 1.6 | | |
| 4. Unterphase | 76 | 56 | 4 | 1.01 | 0.8 | | |
| 5. Unterphase | 72 | 12 | 1 | 0.46 | 0.3 | | |
| 6. Unterphase | 74 | 7 | 1 | 0.22 | 0.2 | | |
| | | | **534** | | **10.1** | | |

### Beispiel 3

### Stabilität von Ligand 2 in 3-Pentennitril

0,15g Ligand 2 wurden in 3g 3-Pentennitril gelöst, mit den aus Tabelle 3 ersichtlichen Mengen Methylimidazol versetzt, unter Argon-Atmosphäre in einem Heizblock für 17h auf 100°C erwärmt und der Restgehalt an Ligand 2 ³¹P-NMR-spektroskopisch bestimmt:

**Tabelle 3**

| Methylimidazol | Restgehalt an Ligand 2 |
|---|---|
| 1000 ppm | 0% |
| 500 ppm | 5% |
| 250 ppm | 18% |
| 125 ppm | 45% |
| 65 ppm | 68% |
| 35 ppm | 87% |

Die Ergebnisse aus Tabelle 3 zeigen, dass ab einem Methylimidazol-Gehalt von < 100 ppm Ligand 2 hinreichend stabil ist.

### Beispiel 4

### Stabilität von Ligand 3 in 3-Pentennitril

0,15g Ligand 3 wurden analog Beispiel 3 mit 3g 3-Pentennitril behandelt. Das Ergebnis wurde ³¹P-NMR-spektroskopisch bestimmt und wurde in Tabelle 4 zusammengefasst:

**Tabelle 4**

| Methylimidazol | Restchelatligandgehalt |
|---|---|
| 1000 ppm | 55% |
| 65 ppm | 98% |

## Patentansprüche

1. Verfahren zur Reinigung von phosphorhaltigen Chelat-Liganden durch Extraktion und gegebenenfalls Phasentrennung bei Temperaturen von (-20) bis 150°C und einem Druck von 1 bis 5000 kPa, **dadurch gekennzeichnet, dass** man polare Extraktionsmittel und als phosphorhaltige Chelat-Liganden bidentate Phosphite, Phosphinite, Phosphit-phosphinite, Phosphit-phosphonite und Phosphonite einsetzt.

2. Verfahren zur Reinigung von phosphorhaltigen Chelat-Liganden durch Extraktion nach Anspruch 1, **dadurch gekennzeichnet, dass** man die Temperatur mindestens 0°C beträgt.

3. Verfahren zur Reinigung von phosphorhaltigen Chelat-Liganden durch Extraktion nach einem der Ansprüche 1 oder 2, **dadurch gekennzeichnet, dass** die Temperatur höchstens 100°C beträgt.

4. Verfahren zur Reinigung von phosphorhaltigen Chelat-Liganden durch Extraktion nach einem der Ansprüche 1 bis 3, **dadurch gekennzeichnet, dass** der Druck mindestens 1 kPa beträgt.

5. Verfahren zur Reinigung von phosphorhaltigen Chelat-Liganden durch Extraktion nach einem der Ansprüche 1 bis 4, **dadurch gekennzeichnet, dass** der Druck höchstens 2000 Pa beträgt.

6. Verfahren zur Reinigung von phosphorhaltigen Chelat-Liganden durch Extraktion nach einem der Ansprüche 1 bis 5, **dadurch gekennzeichnet, dass** man als polares Extraktionsmittel Dinitrile einsetzt.

7. Verfahren zur Reinigung von phosphorhaltigen Chelat-Liganden durch Extraktion nach einem der Ansprüche 1 bis 6, **dadurch gekennzeichnet, dass** man als polares Extraktionsmittel Adipodinitril oder Methylglutarnitril einsetzt.

8. Verfahren zur Reinigung von phosphorhaltigen Chelat-Liganden durch Extraktion nach einem der Ansprüche 1 bis 7, **dadurch gekennzeichnet, dass** man den phosphorhaltigen Chelat-Liganden einen aliphatischen oder cycloaliphatischen Kohlenwasserstoff oder deren Gemische vor oder während der Extraktion oder Phasentrennung zusetzt.

9. Verfahren zur Reinigung von phosphorhaltigen Chelat-Liganden durch Extraktion nach einem der Ansprüche 1 bis 8, **dadurch gekennzeichnet, dass** man dem phosphorhaltigen Chelat-Liganden als aliphatischen oder cycloaliphatischen Kohlenwasserstoff vor oder während der Extraktion oder Phasentrennung n-Heptan, n-Octan, Cyclohexan, Methylcyclohexan oder deren Gemische zusetzt.

10. Verfahren zur Reinigung von phosphorhaltigen Chelat-Liganden durch Extraktion nach einem der Ansprüche 1 bis 9, **dadurch gekennzeichnet, dass** die gereinigten phosphorhaltigen Chelat-Liganden einen Gehalt an Aminbase, Aminhydrochlorid oder deren Gemischen von weniger als 100 ppm haben.

## Claims

1. A process for purifying phosphorus chelate ligands by extraction and optional phase separation at temperatures of from (-20) to 150°C and a pressure of from 1 to 5000 kPa, which comprises using polare extractants, and using, as phosphorus chelate ligands, bidentate phosphites, phosphinites, phosphite phosphinites, phosphite phosphonites and phosphonites.

2. The process for purifying phosphorus chelate ligands by extraction according to claim 1, wherein the temperature is at least 0°C.

3. The process for purifying phosphorus chelate ligands by extraction according to either of claim 1 and 2, wherein the temperature is at most 100°C.

4. The process for purifying phosphorus chelate ligands by extraction according to any of claims 1 to 3, wherein the pressure is at least 1 kPa.

5. The process for purifying phosphorus chelate ligands by extraction according to any of claims 1 to 4, wherein the pressure is at most 2000 kPa.

6. The process for purifying phosphorus chelate ligands by extraction according to any of claims 1 to 5, wherein the polar extractants used are dinitriles.

7. The process for purifying phosphorus chelate ligand by extraction according to any of claims 1 to 6, wherein the polar extractant used is adiponitrile or ethylglutaronitrile.

8. The process for purifying phosphorus chelate ligands by extraction according to any of claim 1 to 7, wherein an aliphatic or cycloaliphatic hydrocarbon or a mixture thereof is are added to the phosphorus chelate ligands before or during the extraction or phase separation.

9. The process for purifying phosphorus chelate ligands by extraction according to any of claims 1 to 8, wherein the aliphatic or cycloaliphatic hydrocarbon added to the phosphorus chelate ligand before or during the extraction or phase separation is n-heptane, n-octane, cyclohexane, methylcyclohexane or mixtures thereof.

10. The process for purifying phosphorus chelate ligands by extraction according to any of claims 1 to 9, wherein the purified phosphorus chelate ligands have a content of amine base, amine hydrochloride or mixtures thereof of less than 100 ppm.

## Revendications

1. Procédé pour la purification de ligands chélatés contenant du phosphore par extraction et le cas échéant séparation des phases à des températures de (-20) à 150°C et à une pression de 1 à 5000 kPa, **caractérisé en ce qu'**on utilisé des argents d'extraction polaire et, comme ligands chélatés contenait du phosphore, des phosphites, des phosphinites, des phosphite-phosphinites, des phosphite-phosphonites et des phosphorites bidentates.

2. Procédé pour la purification de ligands chélatés contenait du phosphore par extraction selon la revendication 1, **caractérisé en ce que** la température est d'au moins 0°C.

3. Procédé pour la purification de ligands chélatés contenait du phosphore par extraction selon l'une quelconque des revendications 1 ou 2, **caractérise en ce que** la température est d'au plus 100°C.

4. Procédé pour la purification de ligands chélatés contenait du phosphore par extraction selon l'une quelconque des revendications 1 à 3, **caractérisé en ce que** la pression est d'au moins 1 kPa.

5. Procédé pour la purification de ligands chélatés contenant du phosphore par extraction salon l'une quelconque des revendications 1 à 4, **caractérisé en ce que** la pression est d'au plus 2000 kPa.

6. Procédé pour la purification de ligands chélates contenant du phosphore par extraction selon l'une quelconque des revendication 1 à 5, **caractérisé en ce qu'**on utilisé des dinitriles comme agent d'extraction solaire.

7. Procédé pour la purification de ligands chélates convenant du phosphore par extraction selon l'une quelconque des revendications 1 à 6, **caractérisé en ce qu'**on utilise de l'adipodinitrile ou du méthylglutaronitrile comme agent d'extraction polaire.

8. Procédé pour la purification de ligands chélatés convenant du phosphore par extraction salon l'une quelconque des revendications 1 à 7, **caractérisé en ce qu'**on mélange les ligands chélatés contenant du phosphore avec un hydrocarbure aliphatique ou un hydrocarbure cycloaliphatique ou leurs mélanges, avant ou pendant l'extraction ou la séparation des phases.

9. Procédé pour la purification de ligands chélatés convenant du phosphore par extraction salon l'une quelconque des revendications 1 à 8, **caractérisé en ce qu'**on mélange le ligand chélate contenant du phosphore avec, comme hydrocarbure aliphatique ou cycloaliphatique, avant ou pendant l'extraction ou la réparation des phases, du n-heptane, du n-octane, du cyclohexane, du méthylcyclohexane ou leurs mélanges.

10. Procédé pour la purification de ligand chélatés contenait du phosphore par extraction selon l'une quelconque des revendications 1 à 9, **caractérisé en ce que** les ligands chélatés contenant du phosphore, purifiés, présentant une veneur en base d'amine, chlorhydrate d'aminé ou sen leurs mélanges de moins de 100 ppm.
